# FASCICULE DE BREVET EUROPEEN

(11) **EP 2 242 924 B1**
(45) Date de publication et mention de la délivrance du brevet: **04.01.2012**
(21) Numéro de dépôt: 09723545.1
(22) Date de dépôt: 16.02.2009
(51) Int. Cl.: F03B 13/18, F03B 13/20, F03B 13/22

(54) **DISPOSITIF POUR UTILISER L'ENERGIE DE LA HOULE**
VORRICHTUNG ZUR NUTZUNG VON DÜNUNGSENERGIE
DEVICE FOR USING SWELL ENERGY

(30) Priorité: 22.02.2008 FR 0800951
(43) Date de publication de la demande: 27.10.2010
(73) Titulaire: Klukowski, Slawomir, 75018 Paris (FR)
(72) Inventeur: Klukowski, Slawomir, 75018 Paris (FR)
(86) Numéro de dépôt international: PCT/FR2009/000166
(87) Numéro de publication internationale: WO 2009/115675

(56) Documents cités:
- WO-A-03/014561
- WO-A-2004/065785
- DE-A1- 19 932 004
- DK-U3- 9 400 381
- GB-A- 2 356 430

## Description

La présente invention est relative aux dispositifs pour collecter l'énergie de la houle.

Plus particulièrement, l'invention concerne un dispositif pour collecter l'énergie de la houle, comprenant :
- un flotteur adapté pour flotter à la surface d'une étendue d'eau soumise à la houle, en se balançant avec un mouvement de roulis sous l'effet de la houle,
- une turbine montée rotative autour d'un axe de rotation sensiblement vertical sous le flotteur, ladite turbine étant adaptée pour se balancer selon ledit mouvement de roulis avec ledit flotteur et pour tourner autour dudit axe de rotation par rapport au flotteur lorsque ledit flotteur se balance sous l'effet de la houle, la turbine comportant au moins trois pales concaves en forme de godets (c'est-à-dire en forme de cuillères, avec une concavité à la fois dans la direction de l'axe de rotation et en direction radiale), ladite turbine étant conformée pour que tout mouvement de roulis du flotteur se traduise toujours par un couple exercé sur la turbine dans un unique sens de rotation prédéterminé.
- un générateur électrique entraîné par la turbine.

Le document WO-A-03/014561 décrit un dispositif de ce type.

La présente invention a notamment pour but d'améliorer le rendement énergétique des dispositifs de ce type.

A cet effet, selon l'invention, un dispositif du genre en question ayant les caractéristiques de la revendication 1 est caractérisé en ce qu'il comporte en outre une colonne s'étendant vers le bas selon un axe longitudinal depuis le flotteur, jusqu'à une extrémité inférieure, ladite colonne étant reliée au flotteur de façon à subir des mouvements de roulis lorsque le flotteur se balance à la surface de l'eau, la turbine étant montée à l'extrémité inférieure de la colonne et l'axe de rotation de la turbine étant sensiblement parallèle à l'axe longitudinal de la colonne (on notera que la colonne susmentionnée peut être une colonne creuse solidaire du flotteur et contenant le plus souvent un arbre de transmission, mais cette colonne pourrait le cas échéant être réduite à un arbre de transmission rotatif s'étendant dans l'eau sous le flotteur et portant la turbine à son extrémité inférieure).

Grâce à la forme particulière de la turbine, on met à profit les mouvements de roulis du flotteur pour faire tourner la turbine, ce qui permet d'améliorer largement le rendement énergétique du dispositif.

Dans divers modes de réalisation du dispositif selon l'invention, on peut éventuellement avoir recours en outre à l'une et/ou à l'autre des dispositions suivante :
- les pales de la turbine ont respectivement des concavités orientées sensiblement orthoradialement à l'axe de rotation de la turbine, toutes dans un sens angulaire opposé audit sens de rotation ;
- chaque pale de la turbine présente sensiblement une forme de calotte sphérique ;
- le flotteur présente une partie inférieure sensiblement en forme de calotte sphérique ;
- le générateur électrique est contenu dans le flotteur et est relié à la turbine par un arbre de transmission ;
- le dispositif comporte en outre un contrepoids réglable verticalement par rapport au flotteur ;
- le dispositif comporte en outre des moyens pour régler une distance entre le flotteur et la turbine ;
- la turbine est portée par un arbre de transmission qui entraîne le générateur électrique et qui est monté coulissant par rapport au flotteur ;
- la turbine comporte un moyeu comprenant au moins une plaque sensiblement perpendiculaire à l'axe de rotation et fixée aux pales ;
- la plaque est en forme de coupelle de concavité tournée vers le haut.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant un exemple de dispositif de collecte d'énergie selon une première forme de réalisation de l'invention, en cours d'utilisation,
- _la figure 2 est une vue agrandie en perspective du dispositif de la figure 1, dans une première position de fonctionnement,
- la figure 3 est une vue en coupe verticale du dispositif de la figure 2,
- la figure 4 est une vue en coupe selon la ligne IV-IV de la figure 3,
- les figures 5 et 6 sont des vues en coupe selon la ligne V-V de la figure 3, montrant le dispositif en cours de fonctionnement, montrant l'effet du balancement de la colonne du dispositif dans deux sens opposés,
- la figure 7 est une vue similaire à la figure 2, montrant le dispositif de collecte d'énergie dans une deuxième position de fonctionnement,
- la figure 8 est une vue de côté d'un exemple de dispositif de collecte d'énergie selon une deuxième forme de réalisation de l'invention,
- la figure 9 est une vue en perspective de la turbine du dispositif de la figure 8,
- la figure 10 est une vue en perspective d'un exemple de dispositif de collecte d'énergie selon une troisième forme de réalisation de l'invention, et
- la figure 11 est une vue en perspective de la turbine du dispositif de la figure 10.

Sur les différentes figures, les mêmes références désignent des éléments identiques ou similaires.

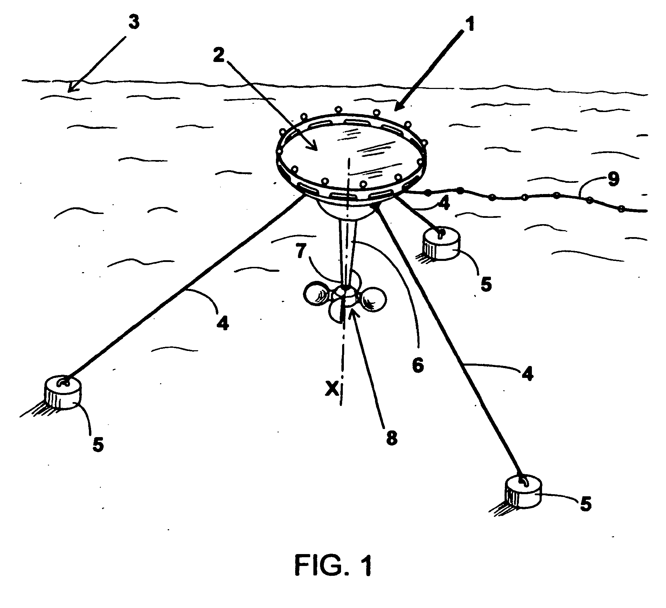

La figure 1 montre un dispositif 1 pour collecter l'énergie de la houle, selon une première forme de réalisation de l'invention. Ce dispositif 1 comporte un flotteur 2 qui flotte à la surface d'une étendue d'eau 3 soumise à la houle et qui est maintenu en position par exemple par une pluralité d'orins 4 reliés à des ancrages 5 fixés au fond de l'eau. Les orins 4, qui peuvent par exemple être au nombre de 3 et répartis sensiblement à 120° les uns des autres, empêchent le flotteur 2 de dériver et de tourner sur lui-même, mais lui permettent de se balancer à la surface de l'eau selon un mouvement de roulis, sous l'effet de la houle. On notera que les orins pourraient être en nombre différent de trois, par exemple deux, et pourraient éventuellement être reliés à des bouées elles-mêmes reliées chacune à un ou plusieurs ancrages par un ou plusieurs autres orins.

Le dispositif 1 comporte en outre une colonne 6, qui est solidaire du flotteur 2 et qui s'étend vers le bas selon un axe longitudinal X jusqu'à une extrémité inférieure 7 au niveau de laquelle est montée une turbine 8, rotative autour de l'axe X. Comme il sera expliqué plus en détail ci-après, les mouvements de balancement du flotteur 2 et de la colonne 6 provoquent une rotation de la turbine 8, laquelle entraîne un générateur électrique contenu dans le flotteur 2. L'énergie électrique ainsi produite peut être transportée vers la terre par exemple par l'intermédiaire d'un câble électrique 9. Eventuellement, cette énergie électrique pourrait être utilisée partiellement ou totalement sur le flotteur 2, par exemple si le flotteur 2 est utilisé pour porter une balise lumineuse (non représentée) servant par exemple pour la navigation maritime.

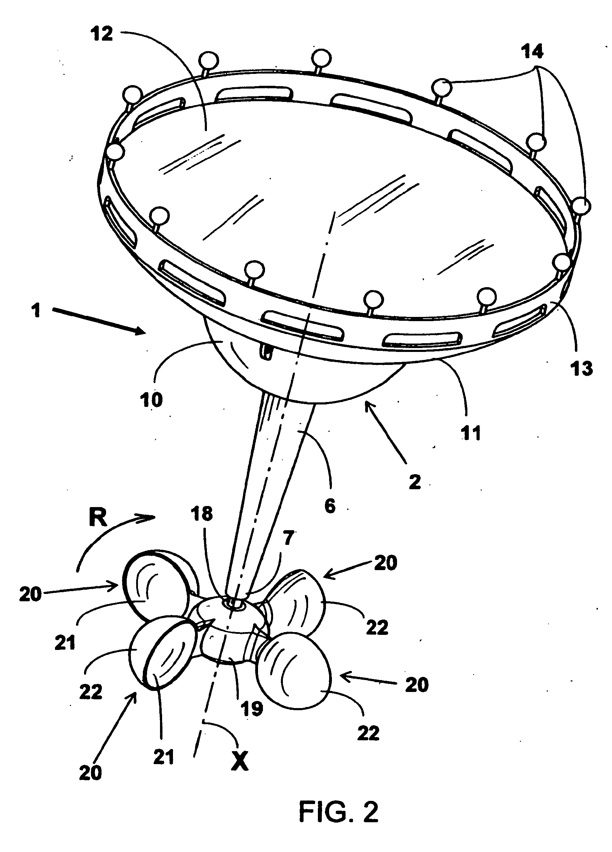

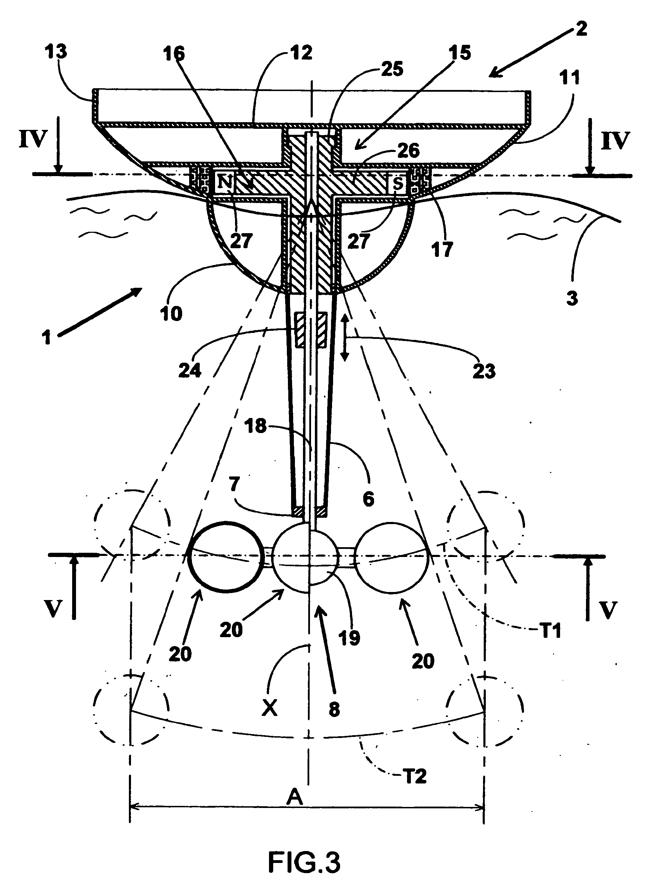

Comme représenté plus en détail sur les figures 2 et 3, le flotteur 2 peut par exemple comporter une partie inférieure 10 en forme de calotte sphérique de concavité tournée vers le haut. Cette partie inférieure 10 peut le cas échéant comporter des compartiments étanches remplis d'air, de façon à rendre le flotteur 2 insubmersible. La partie inférieure 10 se prolonge vers le haut par une partie supérieure 11 élargie, qui peut éventuellement présenter elle-même une forme de portion de sphère de concavité tournée vers le haut et de plus grand rayon que la partie inférieure 10. La partie supérieure 11 du flotteur participe ainsi au rappel du flotteur vers sa position de repos lorsqu'il subit des mouvements de roulis. Comme on peut le voir sur la figure 3, ladite partie supérieure 11 du flotteur se trouve au moins partiellement hors de l'eau.

La partie supérieure 11 du flotteur peut être recouverte par un pont 12 sensiblement étanche, ce pont 12 s'étendant sensiblement horizontalement dans la position de repos du flotteur. Le pont 12 peut être entouré d'un garde corps 13 ou similaire et être doté de dispositifs d'éclairage 14 permettant de signaler le flotteur 2 aux navires. Le cas échéant, le pont 12 peut servir d'aire d'atterrissage pour hélicoptère. Le pont 12 peut en outre comporter des écoutilles (non représentées) ou autres moyens d'accès permettant à du personnel d'entrer à l'intérieur du flotteur 2.

Comme représenté sur la figure 3, le flotteur 2 peut contenir un générateur électrique 15 comportant, d'une part, un rotor 16 monté rotatif autour de l'axe X et, d'autre part, un stator 17 entourant le rotor 16. Le rotor 16 est solidaire d'un arbre de transmission 18 qui s'étend selon l'axe X à l'intérieur de la colonne 6, jusqu'à la turbine 8 dont il est solidaire. L'extrémité inférieure 7 de la colonne 6 forme un palier étanche, empêchant l'entrée d'eau dans la colonne 6. Eventuellement, le rotor 16 pourrait être entraîné par la turbine 8 par l'intermédiaire de tout autre dispositif de transmission que l'arbre 18, par exemple un dispositif de transmission hydraulique.

La turbine 8 est conformée pour qu'un mouvement de balancement (roulis) du flotteur 2 et de la colonne 6 se traduise toujours par un couple exercé sur la turbine dans un unique sens de rotation prédéterminé R (voir la figure 2).

A titre d'exemple, la turbine 8 peut par exemple comporter un moyeu 19 solidaire de l'arbre de transmission 18 et doté d'une pluralité de pales concaves 20 qui sont ici des godets en forme de cuillères répartis autour de l'axe de rotation et ayant chacun une concavité orientée orthoradialement à l'axe de rotation X de la turbine, dans le sens angulaire opposé au sens de rotation R susmentionné. Ces godets 20 peuvent être au nombre d'au moins 3 et répartis angulairement autour de l'axe X.

Dans l'exemple représenté sur les dessins, la turbine 8 comporte quatre godets 20 disposés à 90° les uns des autres et présentant chacun sensiblement une forme de calotte sphérique, chaque godet comportant ainsi une face intérieure concave 21 sensiblement hémisphérique et une face extérieure convexe 22 sensiblement hémisphérique. La turbine 8 peut être réalisée en tout matériau connu, par exemple en acier, en fonte, voire en béton.

Comme représenté sur la figure 3, l'arbre de transmission 18 peut le cas échéant être monté coulissant selon l'axe X par rapport au rotor 16 et à la colonne 6 dans la direction de la double flèche 23, de façon à pouvoir régler la distance entre la turbine 8 et le flotteur 2.

Ce réglage peut être obtenu par exemple par des moyens motorisés connus en soi et non représentés sur les dessins, par exemple un système de réglage à vis sans fin.

Il est également possible de prévoir le cas échéant un contrepoids 24 dans la colonne 6 (ou le cas échéant dans ou sur le flotteur 2). Ce contrepoids 24 peut être relié à l'arbre de transmission 18 ou à la colonne 6 elle-même, et il peut éventuellement être lui-même monté coulissant dans la direction de la double flèche 23, de façon à pouvoir régler la hauteur dudit contrepoids 24. Ce réglage peut être effectué par des moyens de réglage connus en soi et non représentés sur les dessins, par exemple un système de réglage à vis sans fin.

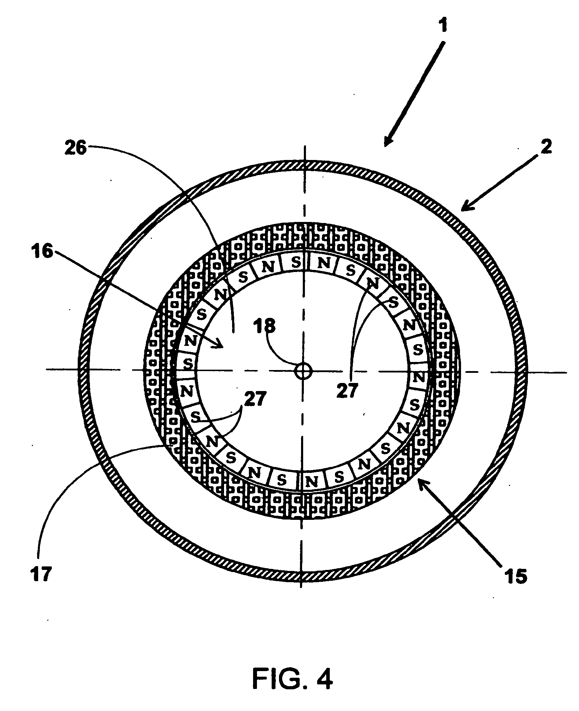

Comme représenté sur les figures 3 et 4, le rotor 16 du générateur électrique peut le cas échéant comporter un moyeu central 25 engagé sur l'arbre de transmission 18 et solidarisé en rotation avec celui-ci, et un disque 26 de plus grand diamètre, ayant un effet de volant d'inertie, autour duquel sont disposés des pôles magnétiques 27. Les pôles magnétiques 27 peuvent être en grand nombre, de façon à permettre que le générateur électrique 15 fonctionne efficacement même pour une faible vitesse de rotation du rotor 16.

On notera que le rotor 16 du générateur électrique pourrait également être relié à l'arbre de transmission 18 (ou à tout autre système de transmission relié à la turbine 8) par l'intermédiaire d'un système d'entraînement unidirectionnel (non représenté) permettant à la turbine d'entraîner le rotor 16 uniquement dans le sens angulaire R mais non de freiner le rotor 16. Dans ce cas, le rotor 16 pourrait éventuellement être accouplé avec un volant d'inertie (non représenté).

Le dispositif qui vient d'être décrit fonctionne comme suit.

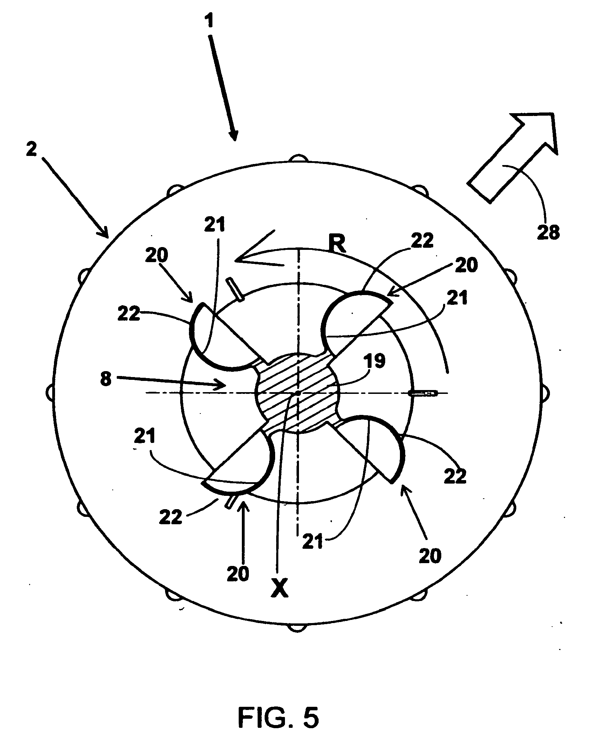

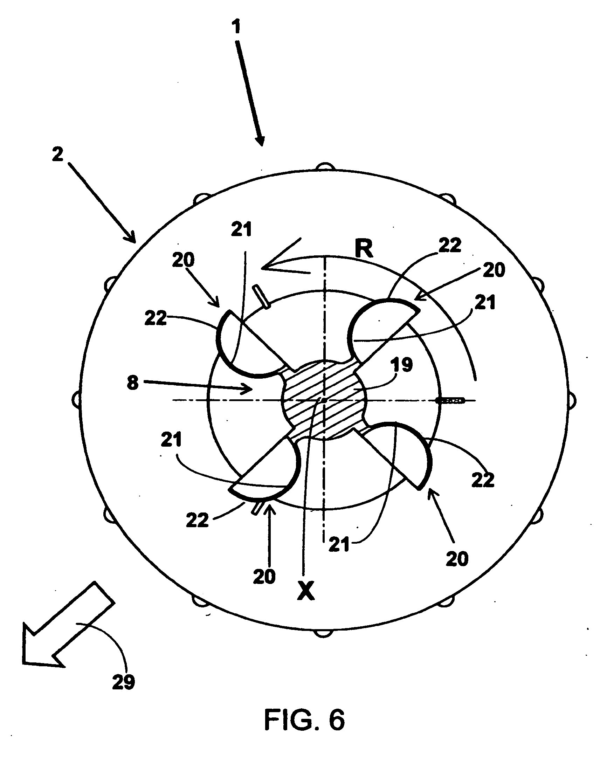

Comme représenté sur les figures 5 et 6, les mouvements de roulis du flotteur 2 se traduisent par des déplacements alternatifs de la turbine 8 dans des directions opposées aléatoires 28, 29. Quel que soit le sens de déplacement de la turbine 8, ce déplacement exerce une force plus élevée sur les faces concaves 21 des godets orientés dans le sens de déplacement 28, 29, que sur les faces convexes 22 orientées dans le même sens, de sorte qu'il en résulte toujours un couple de rotation de la turbine 8 orienté dans le sens de rotation R.

On notera par ailleurs que les mouvements de déplacement verticaux de la turbine 8 dans l'eau se traduisent également par un couple exercé sur la turbine 8 dans le sens de rotation R.

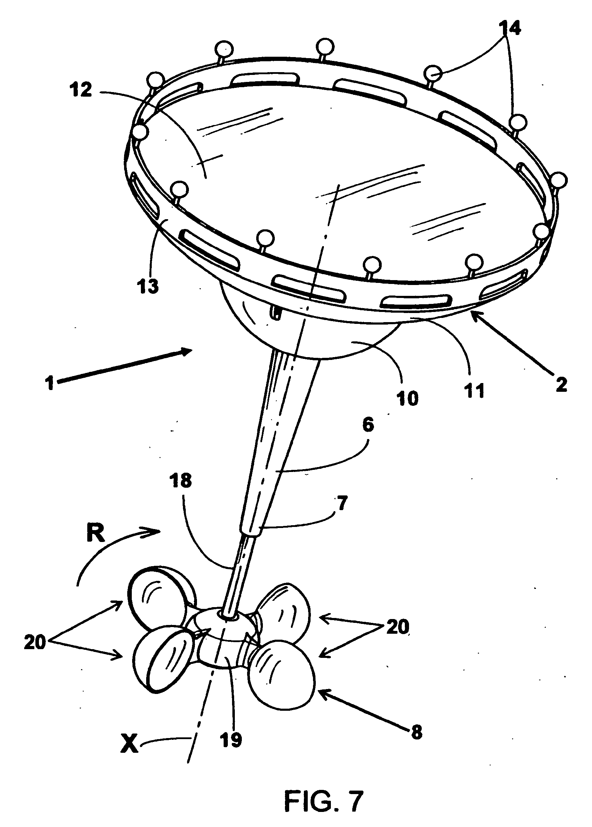

Le dispositif peut être utilisé avec l'arbre de transmission 18 en position rétractée, comme représenté sur la figure 2, lorsque la mer est relativement agitée, auquel cas les mouvements de roulis du flotteur 2 génèrent une certaine amplitude de déplacement A de la turbine 8, qui se déplace alors sur des trajectoires similaires à la trajectoire T1 représentée sur la figure 3. Lorsque la mer est moins agitée, il est possible de descendre la turbine 8 en faisant coulisser l'arbre de transmission 18 vers le bas, comme représenté sur la figure 7, auquel cas la turbine 8 se déplace sur des trajectoires analogues à la trajectoire T2 de la figure 3, ce qui permet d'obtenir à nouveau une amplitude A relativement importante de déplacement de la turbine 8 (figure 3).

Au cours de l'utilisation du dispositif 1, on peut également déplacer son centre de gravité par un déplacement du contrepoids 24, de façon à modifier la fréquence propre d'oscillations du dispositif 1, pour faire en sorte que cette fréquence propre se rapproche de la fréquence des oscillations de la turbine 8 imposées par la houle.

Enfin, on notera que la présence du disque 26 du rotor 16 et/ou l'utilisation d'une turbine 8 lourde, permet de régulariser les mouvements de la turbine 8 et du rotor 16. Il peut également en résulter une trajectoire elliptique de la turbine 8 au cours des balancements du flotteur 2, par effet gyroscopique, ce qui est favorable à l'entraînement de la turbine 8.

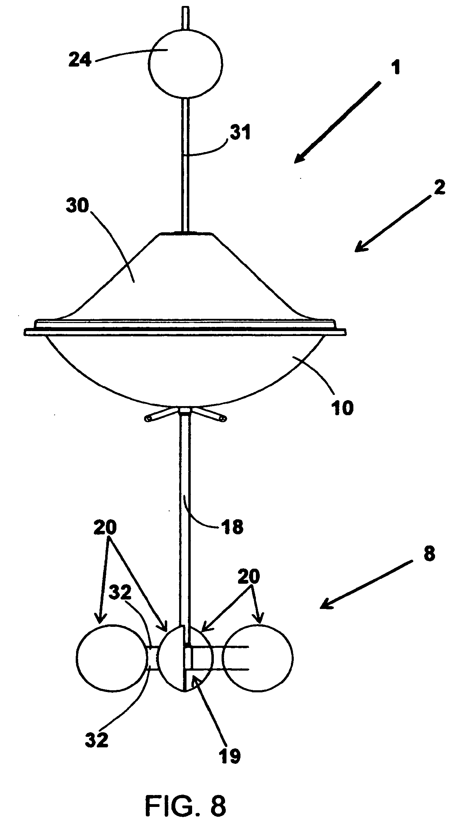

Les deuxième et troisième formes de réalisation de l'invention, représentées sur les figures 8 à 11, sont similaires à la première forme de réalisation décrite ci-dessus et ne seront pas décrites à nouveau en détail ; seules seront décrites les différences de ces deuxième et troisième formes de réalisation par rapport à la première forme de réalisation.

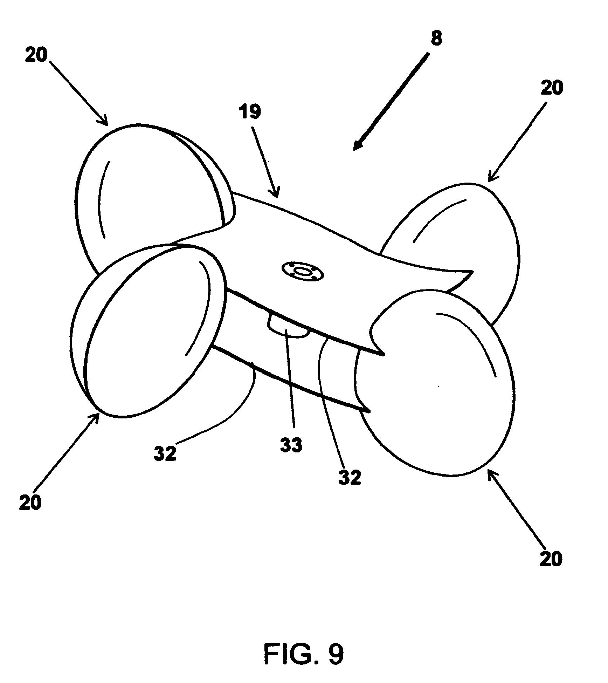

La deuxième forme de réalisation, représentée sur les figures 8 et 9, se distingue de la première forme de réalisation par les points suivants :
- la partie inférieure du flotteur est ici entièrement constituée par la partie 10 en forme de calotte sphérique, de façon à favoriser les mouvements de roulis (bien entendu, cette forme de flotteur serait aussi utilisable dans la première forme de réalisation de l'invention, et d'autres formes de flotteurs seraient également utilisables dans toutes les formes de réalisation de l'invention, par exemple une forme de flotteur dont la partie inférieure serait en forme de portion de cylindre de façon à favoriser les mouvements de roulis dans une direction) ;
- le dispositif ne comporte pas de colonne 6 sous le flotteur, l'arbre 18 sortant directement sous le flotteur 2 (la turbine se trouve toutefois à distance du flotteur 2, par exemple plusieurs mètres sous le flotteur, comme dans la première forme de réalisation) ;
- la partie supérieure 30 du flotteur est de forme tronconique (en variante, cette partie supérieure pourrait être constituée par un pont plat comme dans la première forme de réalisation, et la partie supérieure tronconique 30 de la deuxième forme de réalisation serait également utilisable dans la première forme de réalisation) ;
- le flotteur 2 est surmonté d'un mât vertical 31 portant un contrepoids 24 similaire à celui de la première forme de réalisation, ce contrepoids 24 pouvant éventuellement être réglé en position le long du mât 31 par des moyens motorisés ou non (le mât 31 doté du contrepoids 24 serait également utilisable dans la première forme de réalisation en variante ou en complément du contrepoids 24 monté sur l'arbre 18 de la turbine ; de même, le dispositif selon la deuxième forme de réalisation pourrait être doté d'un contrepoids 24 monté le long de son arbre 18 en variante ou en complément du contrepoids 24 monté sur le mât 31) ;
- le moyeu 19 de la turbine 8 est ici formé par au moins une plaque de tôle, par exemple deux plaques de tôle 32 s'étendant perpendiculairement à l'axe de rotation X ; ces plaques de tôle 32 sont fixées aux faces arrière (extrados) des pales 20, par soudage ou autre, lesdites plaques de tôle 32 peuvent par exemple être solidaires d'un manchon central 33 centré sur l'axe X, qui est emmanché à l'extrémité inférieure de l'arbre 18 et fixé à celui-ci.

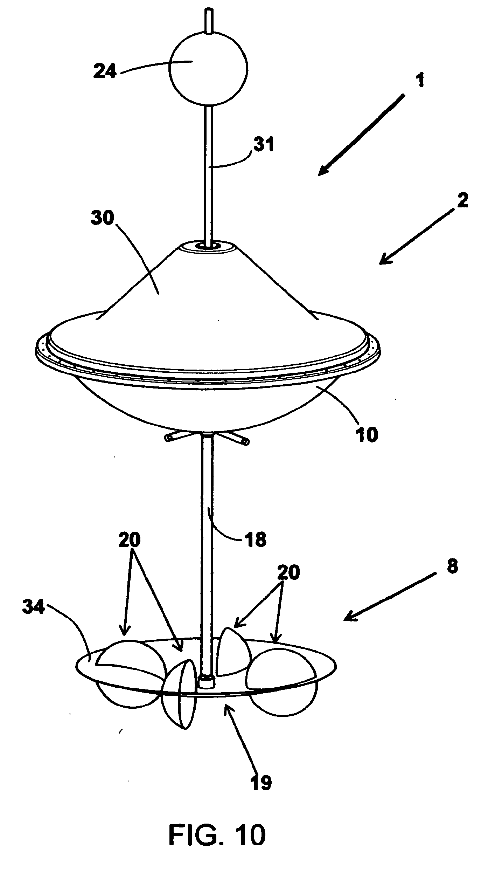

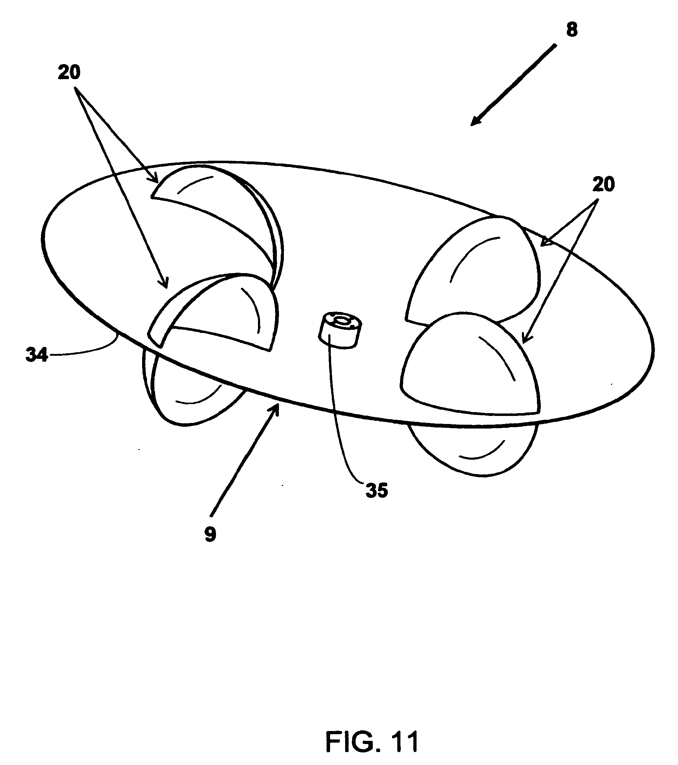

La troisième forme de réalisation de l'invention, représentée sur les figures 10 et 11, est une variante de la deuxième forme de réalisation et se distingue de cette deuxième forme de réalisation uniquement par la forme du moyeu 19 de la turbine 8. Dans la troisième forme de réalisation, le moyeu 19 comporte une plaque de tôle 34 (ou le cas échéant plusieurs plaques de tôle) qui présente une forme de coupelle de révolution autour de l'axe X, avec une concavité tournée avantageusement vers le haut pour freiner les mouvements de remontée du flotteur 2 dans l'eau. Cette plaque de tôle 34 est reliée à l'arbre 18 par exemple au moyen d'un manchon 35 similaire à celui de la deuxième forme de réalisation.

On notera que les turbines des deuxième et troisième formes de réalisation de l'invention pourraient chacune être utilisables dans la première forme de réalisation, et inversement la turbine de la première forme de réalisation serait utilisable dans les deuxième et troisième formes de réalisation.

## Revendications

1. Dispositif pour collecter l'énergie de la houle, comprenant :
- un flotteur (2) adapté pour flotter à la surface d'une étendue d'eau (3) soumise à la houle, en se balançant avec un mouvement de roulis sous l'effet de la houle,
- une turbine (8) montée rotative autour d'un axe de rotation (X) sensiblement vertical sous le flotteur (2), ladite turbine étant adaptée pour se balancer selon ledit mouvement de roulis avec ledit flotteur et pour tourner autour dudit axe de rotation (X) par rapport au flotteur lorsque ledit flotteur se balance sous l'effet de la houle, la turbine (8) comportant au moins trois pales concaves (20) en forme de godets, ladite turbine étant conformée pour que tout mouvement de roulis du flotteur (2) se traduise toujours par un couple exercé sur la turbine dans un unique sens de rotation prédéterminé (R),
- un générateur électrique (15) entraîné par la turbine (8),
le dispositif étant **caractérisé en ce qu'**il comporte en outre une colonne (6) s'étendant vers le bas selon un axe longitudinal depuis le flotteur, jusqu'à une extrémité inférieure (7), ladite colonne étant reliée au flotteur (2) de façon à subir des mouvements de roulis lorsque le flotteur se balance à la surface de l'eau, la turbine (8) étant montée à l'extrémité inférieure (7) de la colonne et l'axe de rotation (X) de la turbine étant sensiblement parallèle à l'axe longitudinal de la colonne.

2. Dispositif selon la revendication 1, dans lequel les pales (20) de la turbine (8) ont respectivement des concavités orientées sensiblement orthoradialement à l'axe de rotation (X) de la turbine, toutes dans un sens angulaire opposé audit sens de rotation (R).

3. Dispositif selon l'une quelconque des revendications précédentes, dans lequel chaque pale (20) de la turbine présente sensiblement une forme de calotte sphérique.

4. Dispositif selon l'une quelconque des revendications précédentes, dans lequel le flotteur (2) présente une partie inférieure (10) sensiblement en forme de calotte sphérique.

5. Dispositif selon l'une quelconque des revendications précédentes, dans lequel le générateur électrique (15) est contenu dans le flotteur (2) et est relié à la turbine (8) par un arbre de transmission (18).

6. Dispositif selon l'une quelconque des revendications précédentes, dans lequel le dispositif comporte en outre un contrepoids (24) réglable verticalement par rapport au flotteur (2).

7. Dispositif selon l'une quelconque des revendications précédentes, dans lequel le dispositif comporte en outre des moyens (18) pour régler une distance entre le flotteur (2) et la turbine (8).

8. Dispositif selon l'une quelconque des revendications précédentes, dans lequel la turbine (8) comporte un moyeu (19) comprenant au moins une plaque (32 ; 34) sensiblement perpendiculaire à l'axe de rotation (X) et fixée aux pales (20).

9. Dispositif selon la revendication 8, dans lequel la plaque (34) est en forme de coupelle de concavité tournée vers le haut.

## Claims

1. A device for capturing wave energy, comprising:
- a float (2) designed to float at the surface of a stretch of water (3) subject to waves, rocking with a rolling movement under the effect of the waves,
- a turbine (8) mounted to rotate about a substantially vertical axis of rotation (X) under the float (2), said turbine being designed to rock in said rolling movement with said float and to turn about said axis of rotation (X) with respect to the float when said float rocks under the effect of the waves, the turbine (8) comprising at least three concave blades (20), in the form of cups, said turbine being shaped so that any rolling movement of the float (2) always results in a torque applied to the turbine in one single same predetermined direction of rotation (R),
- an electric generator (15) driven by the turbine (8),
**characterized in that**, the device further comprises a column (6) extending downward along a longitudinal axis from the float, as far as a lower end (7), said column being connected to the float (2) in such a way that it is subjected to rolling movements when the float rocks at the surface of the water, the turbine (8) being mounted at the lower end (7) of the column and the axis of rotation (X) of the turbine being substantially parallel to the longitudinal axis of the column.

2. The device as claimed in claim 1, in which the blades (20) of the turbine (8) respectively have concave sides facing substantially orthoradially with respect to the axis of rotation (X) of the turbine, all in an angular direction away from said direction of rotation (R).

3. The device as claimed in either one of the preceding claims, in which each blade (20) of the turbine is substantially in the form of a spherical cap.

4. The device as claimed in any one of the preceding claims, in which the float (2) has a lower part (10) substantially in the shape of a spherical cap.

5. The device as claimed in any one of the preceding claims, in which the electric generator (15) is contained in the float (2) and is connected to the turbine (8) by a transmission shaft (18).

6. The device as claimed in any one of the preceding claims, in which the device further comprises a counterweight (24) that is vertically adjustable with respect to the float (2).

7. The device as claimed in any one of the preceding claims, in which the device further comprises means (18) for setting a distance between the float (2) and the turbine (8).

8. The device as claimed in any one of the preceding claims, in which the turbine (8) comprises a hub (19) that has at least one plate (32; 34) substantially perpendicular to the axis of rotation (X) and fixed to the blades (20).

9. The device as claimed in claim 8, in which the plate (34) is in the form of a bowl with its concave side facing upward.

## Patentansprüche

1. Vorrichtung zum Sammeln von Wellenenergie, umfassend:
- einen Schwimmer (2), der dazu ausgeführt ist, auf der Oberfläche eines Wellen ausgesetzten Gewässers (3) zu schwimmen, indem er mit einer Schlingerbewegung unter der Wirkung der Wellen hin und her schaukelt,
- eine Turbine (8), die drehbar um eine im Wesentlichen vertikale Drehachse (X) unter dem Schwimmer (2) angebracht ist, wobei die Turbine dazu ausgeführt ist, gemäß der Schlingerbewegung mit dem Schwimmer hin und her zu schaukeln und sich um die Drehachse (X) bezüglich des Schwimmers zu drehen, wenn der Schwimmer unter der Wirkung der Welle hin und her schaukelt, wobei die Turbine (8) mindestens drei konkave Schaufeln (20) in Form von Schalen hat, wobei die Turbine so konfiguriert ist, dass sich jede Schlingerbewegung des Schwimmers (2) immer in ein Drehmoment auswirkt, das in einer einzigen vorbestimmten Drehrichtung (R) an die Turbine angelegt wird,
- einen elektrischen Generator (15), der von der Turbine (8) angetrieben wird,
wobei die Vorrichtung **dadurch gekennzeichnet ist, dass** sie des Weiteren eine Säule (6) umfasst, die sich entlang einer Längsachse von dem Schwimmer nach unten bis zu einem unteren Ende (7) erstreckt, wobei die Säule so mit dem Schwimmer (2) verbunden ist, dass sie Schlingerbewegungen erfährt, wenn der Schwimmer auf der Wasseroberfläche hin und her schaukelt, wobei die Turbine (8) am unteren Ende (7) der Säule angebracht ist und die Drehachse (X) der Turbine im Wesentlichen parallel zur Längsachse der Säule verläuft.

2. Vorrichtung nach Anspruch 1, wobei die Schaufeln (20) der Turbine (8) jeweils Konkavitäten aufweisen, die im Wesentlichen orthoradial zur Drehachse (X) der Turbine ausgerichtet sind, alle in einer der Drehrichtung (R) entgegengesetzten Winkelrichtung.

3. Vorrichtung nach einem der vorhergehenden Ansprüche, wobei jede Schaufel (20) der Turbine im Wesentlichen eine Kalottenform aufweist.

4. Vorrichtung nach einem der vorhergehenden Ansprüche, wobei der Schwimmer (2) einen unteren Teil (10) im Wesentlichen in Form einer Kalotte aufweist.

5. Vorrichtung nach einem der vorhergehenden Ansprüche, wobei der elektrische Generator (15) in dem Schwimmer (2) enthalten ist und durch eine Übertragungswelle (18) mit der Turbine (8) verbunden ist.

6. Vorrichtung nach einem der vorhergehenden Ansprüche, wobei die Vorrichtung des Weiteren ein Gegengewicht (24) aufweist, das vertikal bezüglich des Schwimmers (2) einstellbar ist.

7. Vorrichtung nach einem der vorhergehenden Ansprüche, wobei die Vorrichtung des Weiteren Mittel (18) zum Einstellen eines Abstands zwischen dem Schwimmer (2) und der Turbine (8) aufweist.

8. Vorrichtung nach einem der vorhergehenden Ansprüche, wobei die Turbine (8) eine Nabe (19) aufweist, die mindestens eine Platte (32; 34) umfasst, die sich im Wesentlichen senkrecht zur Drehachse (X) befindet und an den Schaufeln (20) befestigt ist.

9. Vorrichtung nach Anspruch 8, wobei die Platte (34) in Form einer Kuppel mit einer nach oben weisenden Konkavität vorliegt.
